# FASCICULE DE BREVET EUROPEEN

(11) **EP 3 199 830 B1**
(45) Date de publication et mention de la délivrance du brevet: **01.01.2020**
(21) Numéro de dépôt: 17153098.3
(22) Date de dépôt: 25.01.2017
(51) Int. Cl.: F16F 15/14

(54) **DISPOSITIF D'AMORTISSEMENT PENDULAIRE**
PENDEL-DÄMPFUNGSVORRICHTUNG
PENDULUM DAMPING DEVICE

(30) Priorité: 28.01.2016 FR 1650675
(43) Date de publication de la demande: 02.08.2017
(73) Titulaire: Valeo Embrayages, 80009 Amiens Cedex 2 (FR)
(72) Inventeur: VERHOOG, Roel, 60190 GOURNAY SUR ARONDE (FR)
(74) Mandataire: Cardon, Nicolas

(56) Documents cités:
- DE-A1-102011 088 925
- DE-A1-102013 206 890
- FR-A1- 3 000 157
- FR-A1- 3 010 475
- FR-A1- 3 013 414

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple connu sous le nom de double volant amortisseur.

En variante, dans une telle application, le dispositif d'amortissement pendulaire peut être intégré à un disque de friction de l'embrayage, ou à un convertisseur de couple hydrodynamique, ou à un volant solidaire du vilebrequin du moteur thermique du véhicule, ou à un double embrayage à sec ou humide.

Un tel dispositif d'amortissement pendulaire met classiquement en œuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles. Un tel dispositif d'amortissement est décrit dans les documents FR3013414 et DE102013206890.

Il est connu de choisir le dispositif d'amortissement, par exemple via la forme des pistes de roulement, de manière à ce que ce dernier filtre l'ordre d'excitation d'un moteur thermique à deux cylindres du véhicule, encore appelé « ordre 1 », l'ordre d'excitation d'un moteur thermique étant de façon connue le nombre d'explosions de ce moteur par tour de vilebrequin. De tels dispositifs sont très sensibles à la force de gravité qui provoque un déplacement du ou des corps pendulaires non souhaité et ne permettant pas de filtrer les oscillations de torsion.

Pour remédier à ce problème, il est par exemple connu de la demande DE 10 2012 221 103 de prévoir des ressorts entre deux corps pendulaires voisins circonférentiellement, de manière à ce que les corps pendulaires ainsi reliés résistent à la force de gravité exercée tour à tour sur ces derniers lorsque le dispositif est animé d'un mouvement de rotation. L'insertion de ces ressorts suppose de ménager des logements additionnels dans les corps pendulaires ou de prévoir des moyens de fixation appropriés sur ces corps pendulaires, ce qui est coûteux et complexe. Du fait de l'insertion des ressorts, une fréquence de résonance additionnelle apparaît par ailleurs. L'insertion des ressorts peut encore nécessiter de ménager des découpes ouvertes dans le support du dispositif, réduisant alors le débattement des corps pendulaires. En outre, il est nécessaire de dimensionner correctement les ressorts et le maintien dans le temps des caractéristiques des ressorts n'est pas garanti.

L'invention a pour objet de réduire l'influence de la gravité sur les corps pendulaires, notamment lorsque ces derniers ont pour but de filtrer l'ordre d'excitation d'un moteur thermique à deux cylindres du véhicule, tout en remédiant à tout ou partie des inconvénients ci-dessus qui sont associés à l'emploi de ressorts reliant les corps pendulaires voisins circonférentiellement.

L'invention y parvient, selon l'un de ses aspects, à l'aide d'un dispositif d'amortissement pendulaire, comprenant :
- un support mobile en rotation autour d'un axe,
- au moins un corps pendulaire, mobile par rapport au support, et
- des organes de stabilisation de ce corps pendulaire, chaque organe de stabilisation permettant de relier ce corps pendulaire avec un autre corps pendulaire ou avec le support, et chaque organe de stabilisation exerçant une force sur une extrémité circonférentielle de ce corps pendulaire, chaque organe de stabilisation étant mobile de manière à ce que l'angle défini depuis le centre de gravité de cet organe de stabilisation entre :
   - la direction orthoradiale en ce centre de gravité, et
   - la direction de la force que cet organe de stabilisation exerce sur l'extrémité circonférentielle du corps pendulaire
puisse varier lors du déplacement du corps pendulaire par rapport au support, chaque organe de stabilisation étant différent d'un ressort.

Un même corps pendulaire présente ainsi une première extrémité circonférentielle associée à un premier organe de stabilisation et une deuxième extrémité circonférentielle associée à un deuxième organe de stabilisation. Lorsque ce corps pendulaire est davantage soumis à l'action de la gravité, l'angle précité pour le premier organe de stabilisation devient différent de l'angle précité pour le deuxième organe de stabilisation, et cette différence entre ces angles et la présence des organes de stabilisation ramène le corps pendulaire vers la position qu'il aurait en l'absence de l'action de la gravité.

Chaque organe de stabilisation permet une mise sous tension du ou des corps pendulaires. Cette mise sous tension est appliquée sur chaque extrémité circonférentielle d'un corps pendulaire. Lorsque le dispositif d'amortissement comprend plusieurs corps pendulaires, un équilibre peut se créer entre ces corps pendulaires du dispositif d'amortissement grâce aux organes de stabilisation. L'invention permet ainsi de remédier au problème posé par l'action de la gravité sur les corps pendulaires, sans utiliser des ressorts.

La force de chaque organe de stabilisation exercée sur une des extrémités circonférentielles peut être orientée radialement vers l'extérieur.

Selon une première variante, le dispositif comprend une pluralité de corps pendulaires, chaque organe de stabilisation reliant ensemble les extrémités circonférentielles en regard de deux corps pendulaires voisins circonférentiellement. Autrement dit, circonférentiellement parlant, les corps pendulaires sont deux à deux reliés par un organe de stabilisation. Chaque organe de stabilisation peut être lié de façon équilibrée aux deux corps pendulaires qu'il relie.

Chaque organe de stabilisation peut exercer une force orientée radialement vers l'extérieur sur chacun des corps pendulaires auquel il est relié. La force peut notamment faire un angle compris entre 10° et 90°, notamment entre 15° et 85° avec la direction orthoradiale en ce centre de gravité.

Le dispositif comprend par exemple, trois, quatre, cinq ou six corps pendulaires et le nombre d'organes de stabilisation peut être égal au nombre de corps pendulaires.

Selon une deuxième variante, le dispositif comprend un unique corps pendulaire et deux organes de stabilisation, chaque organe de stabilisation venant relier une extrémité circonférentielle du corps pendulaire avec le support. L'action combinée de ces deux organes de stabilisation peut permettre de mettre sous tension l'unique corps pendulaire par rapport au support.

Selon une troisième variante, le corps pendulaire comprend uniquement deux corps pendulaires et trois organes de stabilisation, un premier organe de stabilisation relie ensemble une extrémité circonférentielle du premier corps pendulaire et une extrémité circonférentielle du deuxième corps pendulaire, un deuxième organe de stabilisation relie l'autre extrémité circonférentielle du premier corps pendulaire avec le support, et un troisième organe de stabilisation relie l'autre extrémité circonférentielle du deuxième corps pendulaire avec le support.

Selon un premier exemple de mise en œuvre de l'invention, chaque organe de stabilisation forme une liaison filaire entre une extrémité circonférentielle du corps pendulaire et : l'extrémité circonférentielle en regard d'un corps pendulaire voisin circonférentiellement, ou le support.

Chaque organe de stabilisation peut, selon ce premier exemple de mise en œuvre, être formé par la liaison filaire.

Selon ce premier exemple de mise en œuvre, chaque organe de stabilisation comprend au moins un poids relié de façon filaire à une extrémité circonférentielle du corps pendulaire et : à l'extrémité circonférentielle en regard du corps pendulaire voisin circonférentiellement, ou au support. Lorsque l'organe de stabilisation comprend un poids, la longueur de la liaison filaire peut être sensiblement la même d'un côté à l'autre du poids.

Selon la première variante ci-dessus et selon ce premier exemple de mise en œuvre de l'invention, chaque organe de liaison peut comprendre au moins un poids relié de façon filaire à l'extrémité circonférentielle du corps pendulaire et à l'extrémité circonférentielle en regard d'un corps pendulaire voisin circonférentiellement.

Selon la deuxième variante ci-dessus, le dispositif peut comprendre, selon ce premier exemple de mise en œuvre :
- un premier organe de stabilisation comprenant au moins un poids relié de façon filaire à une première extrémité circonférentielle du corps pendulaire et au support, et
- un deuxième organe de stabilisation comprenant au moins un poids relié de façon filaire à une deuxième extrémité circonférentielle du corps pendulaire et au support.

Selon la troisième variante ci-dessus et selon ce premier exemple de mise en œuvre de l'invention, le dispositif peut comprendre :
- un premier organe de stabilisation comprenant au moins un poids relié de façon filaire à une extrémité circonférentielle du premier corps pendulaire et à une extrémité circonférentielle du deuxième corps pendulaire,
- un deuxième organe de stabilisation comprenant au moins un poids relié de façon filaire à l'autre extrémité circonférentielle du premier corps pendulaire et au support, et
- un troisième organe de stabilisation comprenant au moins un poids relié de façon filaire à l'autre extrémité circonférentielle du deuxième corps pendulaire et au support.

Selon ce premier exemple de mise en œuvre de l'invention, chaque poids est par exemple une bille ou encore un rouleau. Ce poids pèse par exemple entre 0,5 et 10 g.

Chaque poids est par exemple attaché via un unique fil entre deux corps pendulaires voisins circonférentiellement, ou entre le corps pendulaire et le support. En variante, chaque poids est attaché via deux fils, l'un reliant le poids au corps pendulaire, et l'autre reliant le poids au support ou au corps pendulaire voisin circonférentiellement.

Le ou les fils de l'organe de stabilisation sont notamment réalisés par un câble en acier ou une lame fine en acier

Selon ce premier exemple de mise en œuvre de l'invention, chaque extrémité circonférentielle d'un corps pendulaire peut être définie par un bord sensiblement rectiligne, notamment orienté radialement lorsque le dispositif est au repos.

Selon ce premier exemple de mise en œuvre de l'invention, chaque extrémité de l'organe de stabilisation peut être fixée sur le corps pendulaire ou le support. Un trou est par exemple ménagé dans le corps pendulaire ou dans le support, et l'extrémité de l'organe de stabilisation est introduite dans ce trou. La mobilité d'un organe de stabilisation par rapport à un corps pendulaire ou au support correspond selon ce premier exemple de mise en œuvre à la mobilité du poids, ou en l'absence de poids à la mobilité du centre de la liaison filaire, de cet organe de stabilisation par rapport au corps pendulaire ou au support.

Par approximation, on considère selon ce premier exemple de mise en œuvre de l'invention que le centre de gravité d'un organe de stabilisation correspond au centre circonférentiellement parlant de la liaison filaire. Lorsque la liaison filaire comprend un poids, le centre de gravité de la liaison filaire sera considéré comme étant le centre de gravité du poids.

Selon un deuxième exemple de mise en œuvre de l'invention, chaque organe de stabilisation peut être formé par au moins un rouleau dont le contour extérieur roule sur tout ou partie de l'extrémité circonférentielle du corps pendulaire et : sur tout ou partie de l'extrémité circonférentielle en regard d'un corps pendulaire voisin circonférentiellement ou sur le support.

Selon la première variante ci-dessus et selon ce deuxième exemple de mise en œuvre de l'invention, chaque organe de stabilisation peut être formé par au moins un rouleau dont le contour extérieur roule sur tout ou partie de l'extrémité circonférentielle du corps pendulaire et sur tout ou partie de l'extrémité circonférentielle en regard d'un corps pendulaire voisin circonférentiellement.

Selon la deuxième variante ci-dessus, le dispositif peut alors comprendre, selon ce deuxième exemple de mise en œuvre :
- un premier organe de stabilisation étant formé par au moins un rouleau dont le contour extérieur roule sur tout ou partie de la première extrémité circonférentielle du corps pendulaire et sur le support,
   et
- un deuxième organe de stabilisation étant formé par au moins un rouleau dont le contour extérieur roule sur tout ou partie de la deuxième extrémité circonférentielle du corps pendulaire et sur le support.

Selon la troisième variante ci-dessus et selon ce deuxième exemple de mise en œuvre de l'invention, le dispositif peut comprendre :
- un premier organe de stabilisation étant formé par au moins un rouleau dont le contour extérieur roule sur tout ou partie d'une extrémité circonférentielle du premier corps pendulaire et sur tout ou partie d'une extrémité circonférentielle du deuxième corps pendulaire,
- un deuxième organe de stabilisation étant formé par au moins un rouleau dont le contour extérieur roule sur tout ou partie de l'autre extrémité circonférentielle du premier corps pendulaire et sur le support, et
- un troisième organe de stabilisation étant formé par au moins un rouleau dont le contour extérieur roule sur tout ou partie de l'autre extrémité circonférentielle du deuxième corps pendulaire et sur le support.

Selon ce deuxième exemple de mise en œuvre, chaque rouleau peut présenter un diamètre constant. Chaque rouleau peut s'étendre sur une dimension axiale égale à la dimension axiale des corps pendulaires. En variante, chaque rouleau s'étend sur une dimension axiale supérieure ou inférieure à celle des corps pendulaires.

Selon ce deuxième exemple de mise en œuvre de l'invention, chaque extrémité circonférentielle d'un corps pendulaire peut être définie en tout ou partie par un bord concave se rapprochant du corps pendulaire voisin circonférentiellement lorsque l'on s'éloigne de l'axe de rotation du support. Autrement dit, l'espace circonférentiel existant entre deux corps pendulaires voisins circonférentiellement diminue alors radialement lorsque l'on s'éloigne de l'axe de rotation du support. Chacun de ces bords concaves forme alors une piste de roulement pour l'organe de roulement selon ce deuxième exemple de mise en œuvre de l'invention. Chaque bord définit par exemple un arc de cercle.

Seule la fraction radialement intérieure de l'extrémité circonférentielle d'un corps pendulaire définit par exemple un bord concave, notamment un arc de cercle.

Selon ce deuxième exemple de mise en œuvre de l'invention, chaque organe de stabilisation est pleinement mobile par rapport au corps pendulaire ou au support. En effet, il n'est aucunement fixé au corps pendulaire ou au support. Selon ce deuxième exemple, un rouleau peut en permanence être en contact avec les corps pendulaires, ou avec le corps pendulaire et le support, qu'elle relie.

Selon ce deuxième exemple de mise en œuvre, le diamètre minimal des organes de stabilisation peut être supérieur au diamètre maximal d'un organe de roulement, étant notamment supérieur au double, voire au triple, du diamètre maximal d'un organe de roulement.

Selon un troisième exemple, chaque organe de stabilisation peut être articulé sur l'extrémité circonférentielle du corps pendulaire et sur l'extrémité circonférentielle en regard d'un corps pendulaire voisin circonférentiellement ou sur le support. Chaque organe de stabilisation peut alors comprendre deux barres rigides en compression et un poids disposé entre ces deux barres et, le cas échéant, articulé sur chaque barre. Chaque extrémité d'une barre peut être arrondie afin de former l'articulation précitée.

Selon l'un ou l'autre des exemples de mise en œuvre précédents, tous les organes de stabilisation du dispositif peuvent être identiques.

Dans tout ce qui précède, lorsqu'un organe de stabilisation est interposé entre deux corps pendulaires voisins circonférentiellement,
- l'angle défini entre la direction orthoradiale en son centre de gravité et la direction de la force que cet organe de stabilisation exerce sur l'extrémité circonférentielle d'un de ces deux corps pendulaires, et
- l'angle défini entre cette même direction orthoradiale en son centre de gravité et la direction de la force que cet organe de stabilisation exerce sur l'extrémité circonférentielle de l'autre de ces deux corps pendulaires
peuvent toujours rester égaux entre eux.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale »,
- « solidaire » signifie « rigidement couplé », et
- la position de repos d'un corps pendulaire est celle dans laquelle ce corps pendulaire est centrifugé sans être soumis à des oscillations de torsion provenant des acyclismes du moteur thermique.

Selon l'un ou l'autre des exemples de mise en œuvre précédents, le dispositif peut comprendre un unique support et le corps pendulaire peut comprendre:
- une première et une deuxième masses pendulaires espacées axialement l'une par rapport à l'autre et mobiles par rapport au support, la première masse pendulaire étant disposée axialement d'un premier côté du support et la deuxième masse pendulaire étant disposée axialement d'un deuxième côté du support, et
- au moins un organe de liaison de la première et de la deuxième masses pendulaires appariant lesdites masses,
le dispositif comprenant pour chaque corps pendulaire au moins un organe de roulement guidant le déplacement par rapport au support de ce corps pendulaire, cet organe de roulement coopérant avec une seule première piste de roulement solidaire du support et avec au moins deux deuxièmes pistes de roulement solidaires du corps pendulaire.

Dans un tel cas, la première masse pendulaire et la deuxième masse pendulaire d'un même corps pendulaire peuvent être axialement superposées, et chaque extrémité circonférentielle du corps pendulaire est alors définie par les extrémités circonférentielles axialement superposées de ces masses pendulaires.

Que l'organe de stabilisation soit selon le premier exemple de mise en œuvre, selon le deuxième exemple de mise en œuvre, ou selon le troisième exemple de mise en œuvre, il peut alors venir en contact à la fois d'une extrémité circonférentielle de la première masse pendulaire du corps pendulaire et de l'extrémité circonférentielle correspondante, ie superposée axialement, de la deuxième masse pendulaire de ce corps pendulaire.

En variante, que l'organe de stabilisation soit selon le premier exemple de mise en œuvre, selon le deuxième exemple de mise en œuvre ou selon le troisième exemple de mise en œuvre, il peut être réalisé en deux parties, une première partie reliant la première masse pendulaire du corps pendulaire et le support ou la première masse pendulaire d'un corps pendulaire voisin circonférentiellement, et une deuxième partie reliant la deuxième masse pendulaire du corps pendulaire et le support ou la deuxième masse pendulaire voisin circonférentiellement. Ces première et deuxième parties d'un organe de stabilisation peuvent ainsi être disposées en parallèle entre deux corps pendulaires voisins circonférentiellement ou entre le corps pendulaire et le support. Lorsque l'organe de stabilisation est en deux parties, ces deux parties peuvent être identiques.

Selon le premier exemple de mise en œuvre, chaque organe de stabilisation peut alors comprendre deux liaisons filaires disposées en parallèle. L'organe de stabilisation comprend par exemple deux poids disposés en parallèle, chaque poids étant associé à une liaison filaire dédiée.

Selon le deuxième exemple de mise en œuvre, chaque organe de stabilisation peut alors être formé par deux rouleaux disposés en parallèle, chaque rouleau étant disposé d'un seul côté du support.

Selon une réalisation préférée, l'organe de roulement coopère avec une seule première piste de roulement et avec une seule deuxième piste de roulement, et cette deuxième piste de roulement est définie par l'organe de liaison du corps pendulaire. Une portion du contour de cet organe de liaison définit par exemple la deuxième piste de roulement. En variante, un revêtement peut être déposé sur cette portion du contour de l'organe de liaison pour former la deuxième piste de roulement. Un tel organe de liaison est par exemple emmanché en force via chacune de ses extrémités axiales dans une ouverture ménagée dans une des masses pendulaires. En variante, l'organe de liaison peut être soudé et/ou vissé et/ou riveté via ses extrémités axiales sur chaque masse pendulaire.

Selon la réalisation préférée, le déplacement de chaque corps pendulaire par rapport au support peut être guidé par au moins deux organes de roulement, notamment exactement deux organes de roulement. Deux organes de liaison définissant chacun une deuxième piste de roulement et coopérant chacun avec un organe de roulement peuvent être prévus.

Selon cette réalisation préférée, chaque corps pendulaire comprend par exemple deux organes de liaison appariant chaque masse pendulaire de ce corps, chaque organe de liaison étant solidaire de chacune de ces masses pendulaires. Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon la réalisation préférée, chaque organe de roulement peut être reçu dans une fenêtre du support recevant déjà un organe de liaison et ne recevant aucun autre organe de roulement. Cette fenêtre est par exemple définie par un contour fermé dont une portion définit la première piste de roulement solidaire du support qui coopère avec cet organe de roulement.

Selon une autre réalisation préférée, l'organe de roulement coopère d'une part avec une seule première piste de roulement solidaire du support, et d'autre part avec deux deuxièmes pistes de roulement solidaires du corps pendulaire. Chaque masse pendulaire présente alors une cavité dont une partie du contour définit une de ces deuxièmes pistes de roulement.

Selon cette autre réalisation préférée, chaque organe de liaison regroupe par exemple plusieurs rivets, et cet organe de liaison est reçu dans une fenêtre du support, tandis que l'organe de roulement est reçu dans une cavité du support, distincte d'une fenêtre recevant un organe de liaison.

Selon cette autre réalisation préférée, deux organes de roulement peuvent guider le déplacement du corps pendulaire par rapport au support, et chaque organe de roulement coopère avec une première piste de roulement dédiée à cet organe de roulement et avec deux deuxièmes pistes de roulement dédiées à cet organe de roulement.

Selon cette autre réalisation préférée, chaque organe de roulement peut alors comprendre successivement axialement:
- une portion disposée dans une cavité de la première masse pendulaire et coopérant avec la deuxième piste de roulement formée par une partie du contour de cette cavité,
- une portion disposée dans une cavité du support et coopérant avec la première piste de roulement formée par une partie du contour de cette cavité, et
- une portion disposée dans une cavité de la deuxième masse pendulaire et coopérant avec la deuxième piste de roulement formée par une partie du contour de cette cavité.

En variante, le dispositif d'amortissement pendulaire peut comprendre deux supports solidaires et le corps pendulaire comprend une ou plusieurs masses pendulaires disposées axialement entre les deux supports. Le corps pendulaire peut comprendre plusieurs masses pendulaires, par exemple deux ou trois masses pendulaires, qui peuvent ou non être solidarisées entre elles, et qui sont disposées axialement entre les deux supports. Dans ce cas, chaque organe de stabilisation peut être en une seule partie, ne comprenant qu'une seule liaison filaire et le cas échéant qu'seul poids selon le premier exemple de mise en œuvre, et ne comprenant qu'un seul rouleau selon le deuxième exemple de mise en œuvre.

Dans tout ce qui précède, chaque organe de roulement peut coopérer avec la ou les pistes de roulement solidaires du support et avec la ou les pistes de roulement solidaires du corps pendulaire uniquement via sa surface extérieure.

Chaque organe de roulement est par exemple un rouleau de section circulaire dans un plan perpendiculaire à l'axe de rotation du support. Ce rouleau peut comprendre plusieurs portions cylindriques successives de rayon différent. Les extrémités axiales du rouleau peuvent être dépourvues de rebord annulaire fin. Le rouleau est par exemple réalisé en acier. Le rouleau peut être creux ou plein.

La forme des premières et des deuxièmes pistes de roulement peut être telle que chaque corps pendulaire soit uniquement déplacé par rapport au support en translation autour d'un axe fictif parallèle à l'axe de rotation du support.

En variante, la forme des pistes de roulement peut être telle que chaque corps pendulaire soit déplacé par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Lorsque le dispositif comprend plusieurs corps pendulaires, tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le support peut être réalisé d'une seule pièce, étant par exemple entièrement métallique.

Dans tout ce qui précède, le dispositif peut comprendre au moins une pièce d'interposition dont au moins une partie est axialement disposée entre le support et une masse pendulaire du corps pendulaire. La pièce d'interposition est par exemple fixée sur une masse pendulaire ou le support ou formée par un revêtement déposé sur une masse pendulaire ou sur le support. Une telle pièce d'interposition peut ainsi limiter le déplacement axial du corps pendulaire par rapport au support, évitant ainsi les chocs axiaux entre lesdites pièces, et ainsi une usure et des bruits non souhaités, notamment lorsque le support et/ou la masse pendulaire sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires, étant notamment fixées sur les corps pendulaires. Les pièces d'interposition peuvent être positionnées sur un corps pendulaire de manière à ce qu'il y ait toujours au moins une pièce d'interposition dont au moins une partie est axialement interposée entre une masse pendulaire et le support, quelles que soient les positions relatives du support et de ladite masse lors du déplacement par rapport au support du corps pendulaire.

Dans tout ce qui précède, chaque corps pendulaire peut comprendre au moins un organe d'amortissement de butée contre le support. Chacun de ces organes d'amortissement de butée peut alors venir en contact avec le support pour amortir la butée du corps pendulaire contre ce dernier, par exemple :
- à l'issue d'un déplacement dans le sens trigonométrique de ce corps pendulaire depuis la position de repos pour filtrer une oscillation de torsion, et/ou
- à l'issue d'un déplacement dans le sens non-trigonométrique de ce corps pendulaire depuis la position de repos pour filtrer une oscillation de torsion, et/ou
- en cas de chute radiale du corps pendulaire, par exemple lors de l'arrêt du moteur thermique du véhicule.

Le cas échéant, chaque organe d'amortissement de butée peut amortir la butée du corps pendulaire contre le support à l'issue d'un déplacement dans le sens trigonométrique depuis la position de repos, à l'issue d'un déplacement dans le sens non-trigonométrique depuis la position de repos mais également en cas de chute radiale du corps pendulaire. Un même organe d'amortissement de butée peut ainsi être associé à un corps pendulaire pour amortir tous les contacts précités entre le corps pendulaire et le support.

Chaque organe d'amortissement de butée peut être dédié à un organe de liaison du corps pendulaire et porté par ce dernier.

Chaque organe d'amortissement de butée peut présenter des propriétés élastiques permettant l'amortissement des chocs liés au contact entre le support et le corps pendulaire. Cet amortissement est alors permis par une compression de l'organe d'amortissement de butée. L'organe d'amortissement de butée est par exemple en élastomère ou en caoutchouc.

Tous les corps pendulaires peuvent être accordés à une même valeur d'ordre, ou encore à des valeurs d'ordre différentes, d'un corps pendulaire à l'autre.

L'invention a encore pour objet, selon un autre de ses aspects, un composant pour système de transmission d'un véhicule automobile, le composant étant notamment un double volant amortisseur, un convertisseur de couple hydrodynamique, un volant solidaire du vilebrequin, ou un disque de friction d'embrayage ou un double embrayage à sec ou humide, ce composant comprenant un dispositif d'amortissement pendulaire tel que défini ci-dessus.

Le support du dispositif d'amortissement pendulaire peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

Dans le cas où le dispositif est intégré à un volant solidaire du vilebrequin, le support peut être solidaire de ce volant.

L'invention a encore pour objet, selon un autre de ses aspects, un groupe motopropulseur de véhicule comprenant :
- un moteur thermique de propulsion du véhicule, notamment à deux, trois, quatre, six ou huit cylindres, et
- un composant pour système de transmission tél que défini ci-dessus.

Chaque dispositif d'amortissement pendulaire peut être accordé à l'ordre d'excitation du moteur thermique.

Les corps pendulaires sont par exemple accordés à l'ordre d'excitation d'un moteur thermique à deux cylindres ou à trois cylindres.

Le dispositif d'amortissement pendulaire peut être :
- soit associé à un moteur thermique à deux cylindres,
- soit associé à un moteur thermique à plus de deux cylindres mais pourvu d'un système de désactivation de cylindres permettant que seuls certains des cylindres soient actifs. Dans un tel cas, le moteur peut présenter un mode de fonctionnement dans lequel seulement deux de ses cylindres sont actifs et le ou les corps pendulaires peuvent être accordés pour filtrer l'ordre d'excitation de ce moteur dans ce mode de fonctionnement. Le moteur thermique est par exemple à quatre, six ou huit cylindres, et les corps pendulaires peuvent être accordés pour filtrer l'ordre d'excitation de ce moteur lorsque seulement deux de ses cylindres sont actifs.

L'invention pourra être mieux comprise à la lecture de la description qui va suivre d'exemples non limitatifs de mise en œuvre de celle-ci et à l'examen du dessin annexé sur lequel :
- les figures 1 et 2 représentent un dispositif d'amortissement pendulaire selon une première variante d'un premier exemple de mise en œuvre de l'invention, respectivement sans et avec certaines masses pendulaires représentées en transparence,
- les figures 3 et 4 représentent schématiquement un détail du dispositif d'amortissement pendulaire, respectivement sans et avec effet de la gravité sur un corps pendulaire,
- la figure 5 représente de façon schématique un détail d'une deuxième variante du premier exemple de mise en œuvre de l'invention,
- la figure 6 est une vue similaire à la figure 2 d'un dispositif d'amortissement pendulaire selon un deuxième exemple de mise en œuvre de l'invention,
- la figure 7 est une vue agrandie du détail VII de la figure 6 et la figure 8 est une vue agrandie du détail VIII de la figure 6,
- la figure 9 représente de façon schématique un détail d'une deuxième variante du deuxième exemple de mise en œuvre de l'invention, et
- la figure 10 représente de façon schématique un détail d'un troisième exemple de mise en œuvre de l'invention.

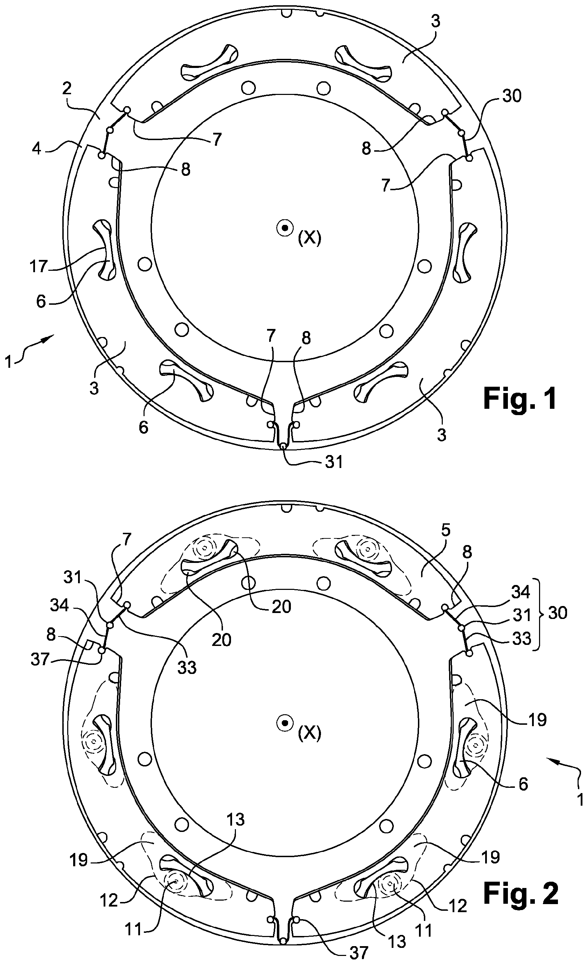

On a représenté de façon schématique sur la figure 1 un dispositif d'amortissement 1 pendulaire.

Le dispositif d'amortissement 1 est de type oscillateur pendulaire.

Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique, un volant solidaire du vilebrequin, un double embrayage à sec ou humide, ou un disque d'embrayage.

Ce composant peut faire partie d'un groupe motopropulseur d'un véhicule automobile, ce groupe comprenant un moteur thermique notamment à deux, trois, quatre, six ou huit cylindres.

Sur la figure 1, le dispositif 1 est au repos, c'est-à-dire qu'il ne filtre pas les oscillations de torsion transmises par le groupe motopropulseur du fait des acyclismes du moteur thermique, mais est soumis à l'action de la gravité..

Le dispositif 1 comprend dans l'exemple considéré:
- un support 2 apte à se déplacer en rotation autour d'un axe X, et
- une pluralité de corps pendulaires 3 mobiles par rapport au support 2.

Le dispositif d'amortissement pendulaire 1 peut comprendre deux supports 2 solidaires et axialement décalés entre lesquels une masse pendulaire 5 ou plusieurs masses pendulaires 5 solidaires entre elles sont disposées et forment le corps pendulaire 3.

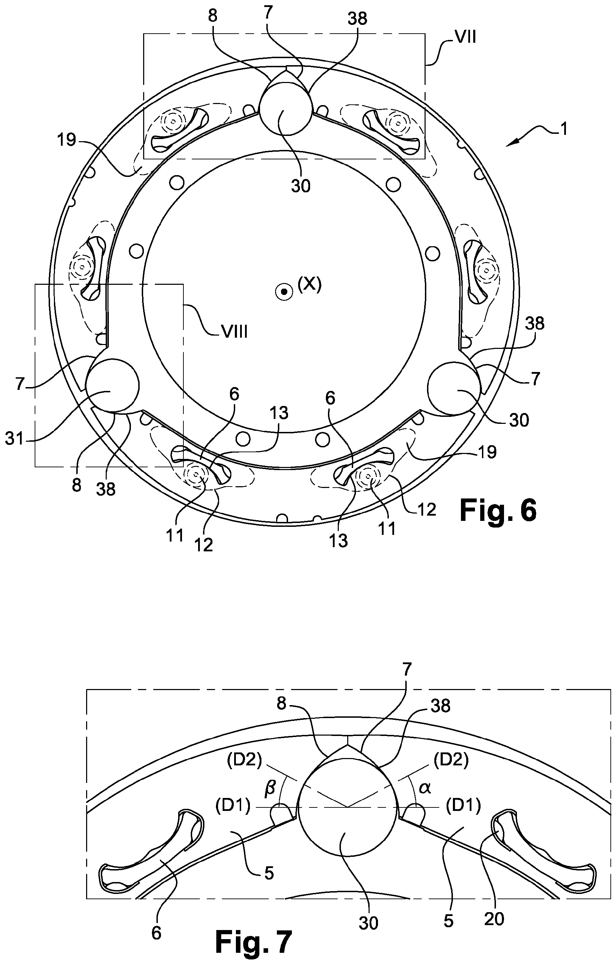

En variante, et comme représenté sur les figures 1 et 6, le dispositif d'amortissement pendulaire 1 peut comprendre un unique support 2 et chaque corps pendulaire 3 peut comprendre deux masses pendulaires 5, chaque masse pendulaire 5 s'étendant respectivement axialement en regard d'un côté 4 du support 2. Ces deux masses pendulaires 5 peuvent alors être solidarisées entre elles par un ou plusieurs organes de liaison 6.

Toutes les masses pendulaires 5 du dispositif 1 disposées d'un même premier côté 4 du support 2 seront par la suite appelées « premières masses pendulaires 5 », et toutes les masses pendulaires 5 du dispositif disposées d'un même deuxième côté 4 du support 2 seront par la suite appelées « deuxièmes masses pendulaires 5 ».

Dans les exemples considérés, deux organes de liaison 6, encore appelés « entretoises », sont décalés angulairement. Chaque organe de liaison 6 peut être solidarisé aux masses pendulaires 5 en étant emmanché en force via chacune de ses extrémités dans une ouverture 17 ménagée dans une des masses pendulaires 5 et /ou en étant vissé et/ou riveté et/ou soudé sur chaque masse pendulaire 5.

Chaque masse pendulaire 5 s'étend dans l'exemple des figures 1 et 2 entre deux extrémités circonférentielles 7 et 8 formées respectivement par un bord sensiblement rectiligne disposé radialement lorsque le corps pendulaire 3 auquel cette masse pendulaire 5 appartient est au repos.

Le dispositif 1 comprend encore des organes de roulement 11, visibles sur la figure 2, qui guident le déplacement des corps pendulaires 3 par rapport au support 2. Les organes de roulement 11 sont par exemple des rouleaux présentant plusieurs diamètres successifs différents.

Le mouvement par rapport au support 2 de chaque corps pendulaire 3 est par exemple guidé par deux organes de roulement 11, chaque organe de roulement 11 coopérant d'une part avec :
- une ou plusieurs premières pistes de roulement 12 solidaires du support 2,
- une ou plusieurs deuxièmes pistes de roulement 13 solidaires du support 2.

Dans les exemples décrits, et comme on peut notamment le voir sur la figure 2, un organe de roulement 11 coopère avec une seule première piste de roulement 12 et avec une seule deuxième piste de roulement 13, la première piste de roulement 12 étant formée par une portion du bord de la fenêtre 19 formée dans le support 2, et recevant l'organe de roulement 11, et la deuxième piste de roulement 13 étant définie par une portion du bord radialement extérieur d'un organe de liaison 6 du corps pendulaire 3.

Le dispositif 1 peut encore comprendre encore des organes d'amortissement de butée 20 qui sont visibles sur les figures 1 et 2. Chaque organe d'amortissement de butée 20 est dans l'exemple considéré réalisé en caoutchouc et peut amortir tout ou partie des chocs se produisant entre un corps pendulaire 3 et le support 2. Dans l'exemple de la figure 2, deux organes d'amortissement de butée 20 sont associés à chaque organe de liaison 6, étant angulairement décalés l'un par rapport à l'autre.

Les corps pendulaires 3 peuvent être tous accordés à une même valeur d'ordre, par exemple à l'ordre d'excitation d'un moteur thermique à deux cylindres, encore appelé « ordre 1 ». En variante, tous les corps pendulaires 3 peuvent être accordés à une autre valeur, par exemple à une valeur d'ordre égale à 0,5, 0,75, 1,5 ou 2.

Selon l'invention, chaque extrémité circonférentielle 7 ou 8 d'un corps pendulaire 3 est associée à un organe de stabilisation 30.

Les figures 1 à 5 représentent un premier exemple de mise en œuvre de l'invention dans lequel chaque organe de stabilisation 30 est réalisé en deux parties disposées en parallèle. Chaque partie de l'organe de stabilisation 30 est disposée d'un côté 4 du support et elle comprend un poids 31, étant par exemple une bille. Dans l'exemple des figures 1 à 4, ce poids 31 est relié de façon filaire à deux extrémités circonférentielles 7 et 8 en regard de deux premières, respectivement deuxièmes, masses pendulaires 5 appartenant à des corps pendulaires 3 voisins circonférentiellement.

Deux parties disposées en parallèle d'un organe de stabilisation 30 relient donc deux corps pendulaires 3 voisins circonférentiellement.

Chaque partie d'un organe de stabilisation 30 comprend dans l'exemple des figures 1 et 2 :
- un premier fil 33 relié à l'extrémité circonférentielle 7 d'une première, respectivement deuxième, masse pendulaire 5 et relié au poids 31, et
- un deuxième fil 34 relié à l'extrémité circonférentielle 8 d'une première, respectivement deuxième, masse pendulaire 5 appartenant à un corps pendulaire 3 voisin circonférentiellement et relié au poids 31.

La fixation d'un fil 33 ou 34 sur une extrémité circonférentielle 7 ou 8 d'une masse pendulaire 5 d'un corps pendulaire 3 se fait par exemple via un trou 37 ménagé dans cette masse pendulaire 5 et à travers lequel ce fil 33 ou 34 est introduit.

Comme on peut le voir sur les figures 1 et 2, les fils 33 et 34 peuvent avoir sensiblement la même longueur et leur poids peut être négligeable, de sorte que l'on peut considérer que le centre de gravité d'une partie d'un organe de stabilisation 30 est situé au centre de gravité du poids 31.

Chaque partie d'un organe de stabilisation 30 définit un angle α depuis son centre de gravité entre :
- la direction D1 orthoradiale en ce centre de gravité, et
- la direction D2 de la force que cette partie de l'organe de stabilisation 30 exerce sur l'extrémité circonférentielle 7 d'une première, respectivement deuxième, masse pendulaire 5 d'un des corps pendulaires 3.

Chaque partie d'un organe de stabilisation 30 définit également un angle β depuis son centre de gravité entre :
- la direction orthoradiale D1 en ce centre de gravité, et
- la direction D2 de la force que cette partie de l'organe de stabilisation 30 exerce sur l'extrémité circonférentielle 8 d'une première, respectivement deuxième, masse pendulaire 5 de l'autre des corps pendulaires 3.

Les angles α et β sont égaux à tout instant, cette valeur commune aux angles α et β changeant lorsque les corps pendulaires 3 correspondants se déplacent pour filtrer des oscillations de torsion.

Sur l'ensemble du dispositif d'amortissement pendulaire 1, tous les angles α des organes de stabilisation 30 du dispositif peuvent être égaux entre eux, et cette même valeur peut être égale à tous les angles β des organes de stabilisation 30. Cette valeur commune aux angles α et β varie alors lors de la filtration par les corps pendulaires 3 d'oscillations de torsion en l'absence d'effet de la gravité sur les corps pendulaires 3.

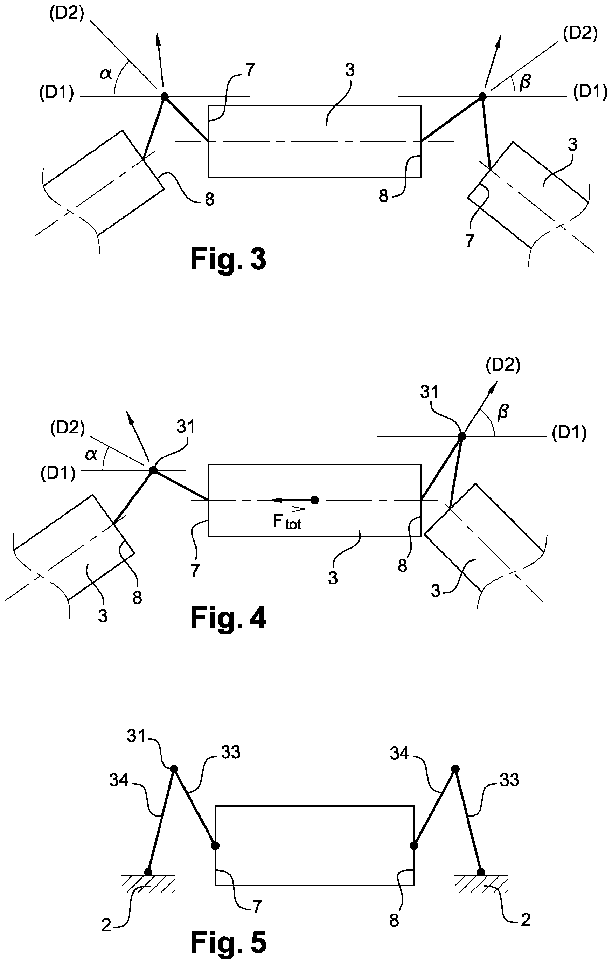

Cette situation en l'absence d'effet de la gravité est représentée sur la figure 3. Les angles α et β sont ici tous égaux à 45°, par exemple, et la résultante des forces exercées sur le centre de gravité de chaque corps pendulaire 3 est nulle.

Lorsque les corps pendulaires 3 sont accordés à l'ordre 1 ou 1,5 notamment, ces corps pendulaires 3 sont sensibles à l'effet de la gravité, cet effet conduisant à un déplacement non souhaité des corps pendulaires. Ce déplacement est par exemple visible pour les deux corps pendulaires 3 de la figure 1 qui sont positionnés les plus bas sur la figure 2. Du fait de ce déplacement, la forme de l'organe de stabilisation 30 disposé entre ces deux corps pendulaires 3 est autre. On constate que les angles α et β définis par cet organe de stabilisation 30 prennent une même valeur différente de celle associées aux autres organes de stabilisation 30 du dispositif.

La valeur des angles α et β définis par cet organe de stabilisation 30 devient ici supérieure à 45°, étant par exemple de l'ordre de 80°. On constate ainsi sur la figure 4 qu'un même corps pendulaire 3 est associé via son extrémité circonférentielle 7 à un angle α faible et via son extrémité circonférentielle 8 à un angle β élevé. Cette différence de valeur d'angle correspond à une résultante *̅F̅ₜ̅ₒ̅ₜ̅*̅ non nulle des forces exercées sur le centre de gravité de ce corps pendulaire 3.

Ce déséquilibre angulaire conduit à un rappel du corps pendulaire 3 vers la position qu'il aurait en absence d'effet de la gravité.

La figure 5 représente de façon schématique une deuxième variante selon ce premier exemple de mise en œuvre de l'invention. Selon cette deuxième variante, le dispositif 1 comprend un unique corps pendulaire 3, qui peut être à masse pendulaire 5 unique, et deux organes de stabilisation 30, un premier organe de stabilisation 30 reliant l'extrémité circonférentielle 7 du corps pendulaire 3 et le support 2 et un deuxième organe de stabilisation 30 reliant l'extrémité circonférentielle 8 du corps pendulaire 3 et le support.

Similairement à ce qui a été décrit en référence aux figures 3 et 4, lorsque le corps pendulaire 3 de la figure 5 se déplace sous l'effet de la gravité, l'angle α associé à son extrémité circonférentielle 7 et l'angle β associé à son extrémité circonférentielle 8 prennent des valeurs différentes, et ce déséquilibre angulaire ramène ce corps pendulaire 3 vers la position qu'il aurait en absence d'effet de la gravité.

On va maintenant décrire en référence aux figures 6 à 9 des organes de stabilisation selon un deuxième exemple de mise en œuvre de l'invention.

Selon une première variante, telle qu'illustrée sur les figures 6 à 8, chaque organe de stabilisation se présente encore en deux parties, chaque partie étant formée par un rouleau 30. Deux rouleaux 30 sont ainsi montés en parallèle entre deux corps pendulaires voisins circonférentiellement 3, de manière à relier ces deux corps pendulaires 3.

Chaque rouleau 30 est ici de diamètre constant. Comme on peut le voir sur les figures 6 à 8, chaque extrémité circonférentielle 7 ou 8 d'un corps pendulaire 3 présente ici une fraction radialement intérieure formant un bord concave 38. Chaque rouleau 30 va alors, via son contour extérieur, rouler alternativement sur le bord concave 38 de l'extrémité circonférentielle 7 d'un des deux corps pendulaires 3 qu'il relie, et sur le bord concave 38 de l'extrémité circonférentielle 8 en regard de l'autre des deux corps pendulaires 3 qu'il relie.

On constate sur les figures 6 à 8 que chaque bord concave 38 forme ici un arc de cercle.

On constate sur la figure 6 que les deux rouleaux 30 reliant deux corps pendulaires 3 soumis à l'effet de la gravité, qui sont sur cette figure 6 les corps pendulaires 3 représentés le plus haut, sont disposés en partie radialement en deça de ces deux corps pendulaires 3, de sorte qu'ils coopèrent avec des portions des bords 38 différentes de celles avec lesquelles coopèrent les rouleaux 30 formant les autres organes de stabilisation du dispositif d'amortissement pendulaire 1.

Plus précisément, les angles α et β qui sont définis depuis le centre de gravité d'un rouleau 30 comme :
- pour α l'angle entre la direction orthoradiale D1 en ce centre de gravité, et la direction D2 de la force que cet organe de stabilisation 30 exerce sur l'extrémité circonférentielle 7 d'une masse pendulaire 5 d'un des corps pendulaires 3.
- pour β l'angle entre la direction orthoradiale D1 en ce centre de gravité, et la direction D2 de la force que cet organe de stabilisation 30 exerce sur l'extrémité circonférentielle 8 d'une masse pendulaire 5 de l'autre des corps pendulaires 3
prennent des valeurs égales mais qui sont différentes à celles des angles α et β associées aux autres rouleaux 30.

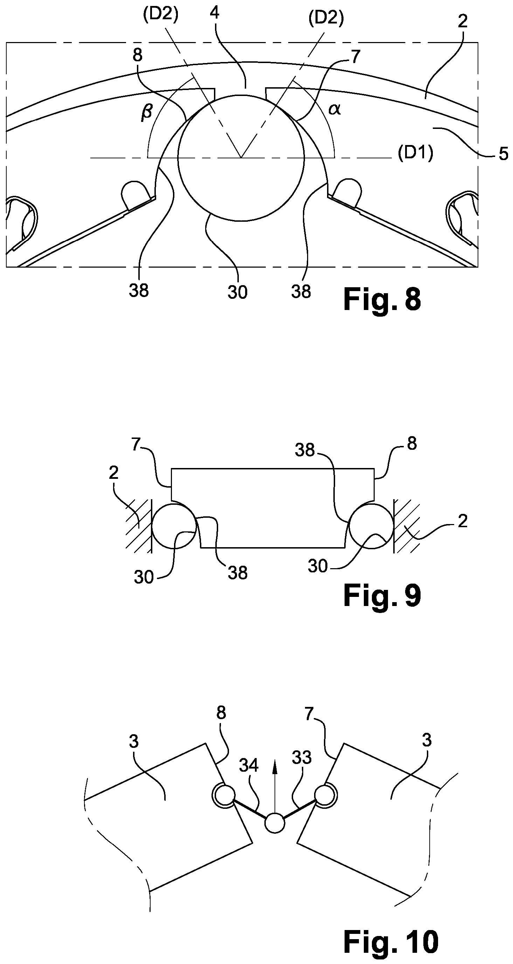

Dans l'exemple décrit et comme on peut le voir sur les figures 7 et 8, pour un rouleau 30 reliant deux corps pendulaires 3 soumis à l'effet de la gravité, les angles α et β sont tous deux égaux à 27,7° tandis que les angles α et β associés aux autres rouleaux sont égaux à 58°.

Ainsi, un même corps pendulaire 3 présente une extrémité circonférentielle 7 associée à un angle α égal à 27,7° différent de l'angle β égal à 58° et associé à son extrémité circonférentielle 8. En outre, la résultante *̅F̅ₜ̅ₒ̅ₜ̅*̅ des forces exercées sur le centre de gravité de ce corps pendulaire 3 est non nulle.

Similairement à ce qui a été décrit en référence au premier exemple de mise en œuvre de l'invention, ce déséquilibre angulaire conduit à un rappel du corps pendulaire 3 vers la position qu'il aurait en absence d'effet de la gravité.

La figure 9 représente de façon schématique une deuxième variante selon ce deuxième exemple de mise en œuvre de l'invention. Selon cette deuxième variante, le dispositif 1 comprend un unique corps pendulaire 3, qui peut être à masse pendulaire 5 unique, et deux organes de stabilisation 30, un premier organe de stabilisation 30 liant l'extrémité circonférentielle 7 du corps pendulaire 3 sur le support 2, et un deuxième organe de stabilisation 30 liantl'extrémité circonférentielle 8 du corps pendulaire 3 sur le support. Chaque organe de stabilisation 30 est ici encore un rouleau, roulant d'une part sur un bord concave 38, notamment circulaire, du corps pendulaire 3, et d'autre part sur le support 2.

Similairement à ce qui a été décrit en référence aux figures 6 à 8, lorsque le corps pendulaire 3 de la figure 9 se déplace sous l'effet de la gravité, l'angle α associé à l'extrémité circonférentielle 7 et l'angle β associé à l'extrémité circonférentielle 8 prennent des valeurs différentes, et ce déséquilibre angulaire ramène ce corps pendulaire vers la position qu'il aurait en absence d'effet de la gravité.

La figure 10 représente de façon très schématique un troisième exemple de mise en œuvre de l'invention. Selon ce troisième exemple, chaque organe de stabilisation 30 est articulé sur l'extrémité circonférentielle 7 d'un corps pendulaire 3 et sur l'extrémité circonférentielle 8 en regard du corps pendulaire 3 circonférentiellement voisin. Chaque organe de stabilisation 30 comprend ici deux barres rigides en compression 33 et 34, et un poids 31 disposé entre ces deux barres. Chaque extrémité d'une barre 33 ou 34 est arrondie, afin de former une articulation avec une extrémité circonférentielle 7 ou 8.

L'invention n'est pas limitée aux exemples qui viennent d'être décrits.

Dans des variantes non représentées, certains organes de stabilisation 30, qu'ils soient selon le premier, le deuxième, ou le troisième exemple de mise en œuvre, relient entre eux des corps pendulaires 3 voisins circonférentiellement, tandis que d'autres organes de stabilisation 30, de même structure que ceux qui viennent d'être mentionnés, relient entre eux un corps pendulaire 3 avec le support 2.

Dans d'autres exemples, chaque organe de stabilisation est en une seule partie, c'est-à-dire :
- formé par une seule liaison filaire, comprenant le cas échéant un seul poids, selon le premier exemple de mise en œuvre,
- formé par un seul rouleau selon le deuxième exemple de mise en œuvre de l'invention,
- formé par un seul doublet de barres rigides se succédant circonférentiellement selon le troisième exemple de mise en œuvre de l'invention.

## Revendications

1. Dispositif d'amortissement pendulaire (1), comprenant :
- un support (2) mobile en rotation autour d'un axe (X),
- au moins un corps pendulaire (3), mobile par rapport au support (2), et
- des organes de stabilisation (30) de ce corps pendulaire (3), chaque organe de stabilisation (30) permettant de relier ce corps pendulaire (3) avec un autre corps pendulaire (3) ou avec le support (2), et chaque organe de stabilisation (30) exerçant une force sur une extrémité circonférentielle (7, 8) de ce corps pendulaire (3),
chaque organe de stabilisation (30) étant mobile de manière à ce que l'angle (α, β) défini depuis le centre de gravité de cet organe de stabilisation (30) entre :
- la direction orthoradiale (D1) en ce centre de gravité, et
- la direction (D2) de la force que cet organe de stabilisation (30) exerce sur l'extrémité circonférentielle (7, 8) du corps pendulaire (3) puisse varier lors du déplacement du corps pendulaire (3) par rapport au support (2),
**caractérisé en ce que** chaque organe de stabilisation (30) comprend au moins un poids (31) relié de façon filaire à une extrémité circonférentielle (7, 8) du corps pendulaire (3) et : à l'extrémité circonférentielle en regard (8, 7) d'un corps pendulaire (3) voisin circonférentiellement ou au support (2),
ou **en ce que** chaque organe de stabilisation (30) est formé par au moins un rouleau (30) dont le contour extérieur roule sur tout ou partie de l'extrémité circonférentielle (7, 8) du corps pendulaire (3) et : sur tout ou partie de l'extrémité circonférentielle (8, 7) en regard d'un corps pendulaire (3) voisin circonférentiellement ou sur le support (2).

2. Dispositif selon la revendication 1, comprenant une pluralité de corps pendulaires (3), chaque organe de stabilisation (30) reliant ensemble les extrémités circonférentielles (7, 8) en regard de deux corps pendulaires (3) voisins circonférentiellement.

3. Dispositif selon la revendication 1, comprenant un unique corps pendulaire (3) et deux organes de stabilisation (30), chaque organe de stabilisation (30) venant relier une extrémité circonférentielle (7, 8) du corps pendulaire (3) avec le support (2).

4. Dispositif selon la revendication 1, comprenant uniquement deux corps pendulaires (3) et trois organes de stabilisation (30): un premier organe de stabilisation (30) reliant ensemble une extrémité circonférentielle (7) du premier corps pendulaire (3) et une extrémité circonférentielle (8) du deuxième corps pendulaire (3), un deuxième organe de stabilisation (30) reliant l'autre extrémité circonférentielle (8) du premier corps pendulaire (3) avec le support (2), et un troisième organe de stabilisation (30) reliant l'autre extrémité circonférentielle (7) du deuxième corps pendulaire (3) avec le support (2).

5. Dispositif selon l'une quelconque des revendications précédentes, dans lequel chaque organe de stabilisation (30) comprend au moins un poids (31) et dans lequel chaque extrémité circonférentielle (7, 8) d'un corps pendulaire (3) est définie par un bord rectiligne, ce bord étant notamment orienté radialement lorsque le dispositif est au repos.

6. Dispositif selon l'une quelconque des revendications 1 à 4, dans lequel chaque organe de stabilisation (30) est formé par au moins un rouleau (30) et dans lequel chaque extrémité circonférentielle (7, 8) d'un corps pendulaire (3) est définie en tout ou partie par un bord concave (38) se rapprochant du corps pendulaire (3) voisin circonférentiellement lorsque l'on s'éloigne de l'axe de rotation (X) du support (2).

7. Dispositif selon l'une quelconque des revendications précédentes, tous les organes de stabilisation (30) étant identiques.

8. Dispositif selon l'une quelconque des revendications précédentes, comprenant un unique support (2), le corps pendulaire (3) comprenant :
- une première et une deuxième masses pendulaires (5) espacées axialement l'une par rapport à l'autre et mobiles par rapport au support (2), la première masse pendulaire (5) étant disposée axialement d'un premier côté (4) du support (2) et la deuxième masse pendulaire (5) étant disposée axialement d'un deuxième côté (4) du support (2), et
- au moins un organe de liaison (6) de la première et de la deuxième masses pendulaires (5) appariant lesdites masses,
le dispositif comprenant pour chaque corps pendulaire au moins un organe de roulement (11) guidant le déplacement par rapport au support de ce corps pendulaire, cet organe de roulement (11) coopérant avec une seule première piste de roulement solidaire du support (2) et avec au moins deux deuxièmes pistes de roulement (13) solidaires du corps pendulaire (3).

9. Dispositif selon la revendication 8, l'organe de roulement (11) coopérant avec une unique deuxième piste de roulement (13), cette deuxième piste de roulement (13) étant définie par l'organe de liaison (6) du corps pendulaire (3).

10. Dispositif selon la revendication 8, l'organe de roulement (11) coopérant avec deux deuxièmes pistes de roulement (13) solidaires du corps pendulaire (3), chaque masse pendulaire (5) présentant une cavité (17) dont une portion du contour définit une de ces deuxièmes pistes de roulement (13).

11. Dispositif selon l'une quelconque des revendications 1 à 7, comprenant deux supports (2) solidaires et espacés axialement, le corps pendulaire (3) comprenant au moins une masse pendulaire (5) disposée axialement entre les deux supports (2),

12. Dispositif selon l'une quelconque des revendications précédentes, chaque corps pendulaire (3) étant accordé à l'ordre d'excitation d'un moteur thermique à deux cylindres ou à trois cylindres.

## Patentansprüche

1. Pendeldämpfungsvorrichtung (1), die enthält:
- einen um eine Achse (X) drehbeweglichen Träger (2),
- mindestens einen bezüglich des Trägers (2) beweglichen Pendelkörper (3), und
- Stabilisierungselemente (30) dieses Pendelkörpers (3), wobei jedes Stabilisierungselement (30) es ermöglicht, diesen Pendelkörper (3) mit einem anderen Pendelkörper (3) oder mit dem Träger (2) zu verbinden, und jedes Stabilisierungselement (30) eine Kraft auf ein Umfangsende (7, 8) dieses Pendelkörpers (3) ausübt,
wobei jeder Stabilisierungselement (30) so beweglich ist, dass der Winkel (α,β), der ausgehend vom Schwerpunkt dieses Stabilisierungselements (30) definiert ist zwischen:
- der orthoradialen Richtung (D1) in diesem Schwerpunkt und
- der Richtung (D2) der Kraft, die dieses Stabilisierungselement (30) auf das Umfangsende (7, 8) des Pendelkörpers (3) ausübt, bei der Verschiebung des Pendelkörpers (3) bezüglich des Trägers (2) variieren kann,
**dadurch gekennzeichnet, dass**
jedes Stabilisierungselement (30) mindestens ein Gewicht (31) enthält, das mittels Draht mit einem Umfangsende (7, 8) des Pendelkörpers (3) und mit dem gegenüberliegenden Umfangsende (8, 7) eines in Umfangsrichtung benachbarten Pendelkörpers (3) oder mit dem Träger (2) verbunden ist, oder dass jedes Stabilisierungselement (30) von mindestens einer Rolle (30) gebildet wird, deren Außenumriss auf dem ganzen oder einen Teil des Umfangsendes (7, 8) des Pendelkörpers (3) und auf dem ganzen oder einem Teil des gegenüberliegenden Umfangsendes (8, 7) eines in Umfangsrichtung benachbarten Pendelkörpers (3) oder auf dem Träger (2) rollt.

2. Vorrichtung nach Anspruch 1, die eine Vielzahl von Pendelkörpern (3) enthält, wobei jedes Stabilisierungselement (30) die gegenüberliegenden Umfangsenden (7, 8) von zwei in Umfangsrichtung benachbarten Pendelkörpern (3) miteinander verbindet.

3. Vorrichtung nach Anspruch 1, die einen einzigen Pendelkörper (3) und zwei Stabilisierungselemente (30) enthält, wobei jedes Stabilisierungselement (30) ein Umfangsende (7, 8) des Pendelkörpers (3) mit dem Träger (2) verbindet.

4. Vorrichtung nach Anspruch 1, die nur zwei Pendelkörper (3) und drei Stabilisierungselemente (30) enthält: ein erstes Stabilisierungselement (30), das ein Umfangsende (7) des ersten Pendelkörpers (3) und ein Umfangsende (8) des zweiten Pendelkörpers (3) miteinander verbindet, ein zweites Stabilisierungselement (30), das das andere Umfangsende (8) des ersten Pendelkörpers (3) mit dem Träger (2) verbindet, und ein drittes Stabilisierungselement (30), das das andere Umfangsende (7) des zweiten Pendelkörpers (3) mit dem Träger (2) verbindet.

5. Vorrichtung nach einem der vorhergehenden Ansprüche, wobei jedes Stabilisierungselement (30) mindestens ein Gewicht (31) enthält, und wobei jedes Umfangsende (7, 8) eines Pendelkörpers (3) durch einen geradlinigen Rand definiert wird, wobei dieser Rand insbesondere radial ausgerichtet ist, wenn die Vorrichtung in der Ruhestellung ist.

6. Vorrichtung nach einem der Ansprüche 1 bis 4, wobei jedes Stabilisierungselement (30) von mindestens einer Rolle (30) gebildet wird, und wobei jedes Umfangsende (7, 8) eines Pendelkörpers (3) ganz oder teilweise durch einen konkaven Rand (38) definiert wird, der sich dem in Umfangsrichtung benachbarten Pendelkörper (3) nähert, wenn man sich von der Drehachse (X) des Trägers (2) entfernt.

7. Vorrichtung nach einem der vorhergehenden Ansprüche, wobei alle Stabilisierungselemente (30) gleich sind.

8. Vorrichtung nach einem der vorhergehenden Ansprüche, die einen einzigen Träger (2) enthält, wobei der Pendelkörper (3) enthält:
- eine erste und eine zweite Pendelmasse (5), die axial zueinander beabstandet und bezüglich des Trägers (2) beweglich sind, wobei die erste Pendelmasse (5) axial auf einer ersten Seite (4) des Trägers (2) und die zweite Pendelmasse (5) axial auf einer zweiten Seite (4) des Trägers (2) angeordnet ist, und
- mindestens ein Verbindungselement (6) der ersten und der zweiten Pendelmasse (5), das die Massen paart,
wobei die Vorrichtung für jeden Pendelkörper mindestens ein Rollelement (11) enthält, das die Verschiebung dieses Pendelkörpers bezüglich des Trägers lenkt, wobei dieses Rollelement (11) mit einer einzigen fest mit dem Träger (2) verbundenen ersten Rollbahn und mit mindestens zwei fest mit dem Pendelkörper (3) verbundenen zweiten Rollbahnen (13) zusammenwirkt.

9. Vorrichtung nach Anspruch 8, wobei das Rollelement (11) mit einer einzigen zweiten Rollbahn (13) zusammenwirkt, wobei diese zweite Rollbahn (13) vom Verbindungselement (6) des Pendelkörpers (3) definiert wird.

10. Vorrichtung nach Anspruch 8, wobei das Rollelement (11) mit zwei fest mit dem Pendelkörper (3) verbundenen Rollbahnen (13) zusammenwirkt, wobei jede Pendelmasse (5) einen Hohlraum (17) aufweist, von dem ein Abschnitt des Umrisses eine dieser zweiten Rollbahnen (13) definiert.

11. Vorrichtung nach einem der Ansprüche 1 bis 7, die zwei Träger (2) enthält, die fest verbunden und axial beabstandet sind, wobei der Pendelkörper (3) mindestens eine Pendelmasse (5) enthält, die axial zwischen den zwei Trägern (2) angeordnet ist.

12. Vorrichtung nach einem der vorhergehenden Ansprüche, wobei jeder Pendelkörper (3) auf die Erregerordnung eines Wärmekraftmotors mit zwei oder drei Zylindern abgestimmt ist.

## Claims

1. Pendulum damping device (1) comprising:
- a support (2) that is rotatable about an axis (X),
- at least one pendulum body (3) that is movable with respect to the support (2), and
- stabilizing members (30) for this pendulum body (3), each stabilizing member (30) making it possible to connect this pendulum body (3) to another pendulum body (3) or to the support (2), and each stabilizing member (30) exerting a force on a circumferential end (7, 8) of this pendulum body (3),
each stabilizing member (30) being movable such that the angle (α, β), defined from the centre of gravity of this stabilizing member (30), between:
- the orthoradial direction (D1) at this centre of gravity and
- the direction (D2) of the force that this stabilizing member (30) exerts on the circumferential end (7, 8) of the pendulum body (3) can vary during the movement of the pendulum body (3) with respect to the support (2),
**characterized in that** each stabilizing member (30) comprises at least one weight (31) connected by a wire to a circumferential end (7, 8) of the pendulum body (3) and to the opposing circumferential end (8, 7) of a circumferentially adjacent pendulum body (3) or to the support (2),
or **in that** each stabilizing member (30) is formed by at least one roller (30), the outer contour of which rolls over all or part of the circumferential end (7, 8) of the pendulum body (3) and over all or part of the opposing circumferential end (8, 7) of a circumferentially adjacent pendulum body (3) or over the support (2).

2. Device according to Claim 1, which comprises a plurality of pendulum bodies (3), each stabilizing member (30) connecting together the opposing circumferential ends (7, 8) of two circumferentially adjacent pendulum bodies (3).

3. Device according to Claim 1, which comprises a unique pendulum body (3) and two stabilizing members (30), each stabilizing member (30) connecting a circumferential end (7, 8) of the pendulum body (3) to the support (2).

4. Device according to Claim 1, which comprises only two pendulum bodies (3) and three stabilizing members (30), a first stabilizing member (30) connecting together a circumferential end (7) of the first pendulum body (3) and a circumferential end (8) of the second pendulum body (3), a second stabilizing member (30) connecting the other circumferential end (8) of the first pendulum body (3) to the support (2), and a third stabilizing member (30) connecting the other circumferential end (7) of the second pendulum body (3) to the support (2).

5. Device according to any one of the preceding claims, wherein each stabilizing member (30) comprises at least one weight (31), and wherein each circumferential end (7, 8) of a pendulum body (3) is defined by a rectilinear edge, this edge being oriented in particular radially when the device is at rest.

6. Device according to any one of Claims 1 to 4, wherein each stabilizing member (30) is formed by at least one roller (30), and wherein each circumferential end (7, 8) of a pendulum body (3) is defined entirely or in part by a concave edge (38) that becomes closer to the circumferentially adjacent pendulum body (3) with increasing distance from the axis of rotation (X) of the support (2).

7. Device according to any one of the preceding claims, wherein all the stabilizing members (30) are identical.

8. Device according to any one of the preceding claims, which comprises a unique support (2), the pendulum body (3) comprising:
- a first and a second pendulum mass (5) that are spaced apart axially and are movable with respect to the support (2), the first pendulum mass (5) being disposed axially on a first side (4) of the support (2) and the second pendulum mass (5) being disposed axially on a second side (4) of the support (2), and
- at least one connecting member (6) of the first and second pendulum masses (5), coupling said masses,
the device comprising, for each pendulum body, at least one rolling member (11) that guides the movement of this pendulum body with respect to the support, this rolling member (11) cooperating with one first raceway integral with the support (2) and with at least two second raceways (13) integral with the pendulum body (3).

9. Device according to Claim 8, wherein the rolling member (11) cooperates with a unique second raceway (13), this second raceway (13) being defined by the connecting member (6) of the pendulum body (3).

10. Device according to Claim 8, wherein the rolling member (11) cooperates with two second raceways (13) integral with the pendulum body (3), each pendulum mass (5) having a cavity (17), a portion of the contour of which defines one of these second raceways (13).

11. Device according to any one of Claims 1 to 7, which comprises two secured and axially spaced-apart supports (2), the pendulum body (3) comprising at least one pendulum mass (5) disposed axially between the two supports (2).

12. Device according to any one of the preceding claims, wherein each pendulum body (3) is tuned to the excitation order of a two-cylinder or three-cylinder combustion engine.
